Europäisches Patentamt

(19) European Patent Office

Office européen des brevets

(11) Publication number : **0 347 124 B1**

# (12) EUROPEAN PATENT SPECIFICATION

(45) Date of publication of patent specification :
**22.04.92 Bulletin 92/17**

(51) Int. Cl.⁵ : **E03B 7/12,** F16L 53/00, F17D 1/18

(21) Application number : **89305860.2**

(22) Date of filing : **09.06.89**

(54) Apparatus and method for maintaining a minimum temperature for liquids in pipes.

(30) Priority : **17.06.88 GB 8814418**
**18.11.88 GB 8826991**

(43) Date of publication of application :
**20.12.89 Bulletin 89/51**

(45) Publication of the grant of the patent :
**22.04.92 Bulletin 92/17**

(84) Designated Contracting States :
**AT BE CH DE FR GB IT LI NL SE**

(56) References cited :
**US-A- 2 971 873**
**US-A- 3 983 360**
**US-A- 4 002 881**
**US-A- 4 423 311**

(73) Proprietor : **Breij, Martinus Adrianus**
**26 Rosedale Gardens**
**Belton Great Yarmouth Norfolk NR31 9PN (GB)**
Proprietor : **Shanks, John William**
**32 Homefield Avenue**
**Bradwell Great Yarmouth Norfolk NR31 8NS (GB)**

(72) Inventor : **Breij, Martinus Adrianus**
**26 Rosedale Gardens**
**Belton Great Yarmouth Norfolk NR31 9PN (GB)**
Inventor : **Shanks, John William**
**32 Homefield Avenue**
**Bradwell Great Yarmouth Norfolk NR31 8NS (GB)**

(74) Representative : **Gillam, Francis Cyril et al**
**SANDERSON & CO. European Patent**
**Attorneys 34, East Stockwell Street**
**Colchester Essex CO1 1ST (GB)**

## Description

This invention relates both to a method of and apparatus for maintaining a minimum temperature for liquids in pipes.

The invention is applicable both to water supply pipes, in which case the minimum temperature may typically be slightly above freezing point, and also to other liquid-carrying pipes for example to ensure a sufficiently low viscosity for the carried liquid, or perhaps to ensure the liquid temperature is sufficiently high for subsequent processing.

In the case of water supply pipes, there is in many climates a considerable risk that during the winter months, the water may freeze in the supply pipes, unless adequate measures are taken to protect the pipes from sub-zero temperatures. In permanent water supply installations, such protection ordinarily may be provided by an adequate layer of thermal insulation (lagging), but this form of protection is not entirely suitable for use on temporary water supply pipes, or for water supply pipes which are located out-of-doors. In the case of external installations, unless special measures are adopted the lagging is likely to become wet, the consequence of which is that the thermal insulation loses much of its efficiency. A further problem often encountered for example on building sites where temporary water supplies are frequently required is that any thermal insulation provided around a water supply pipe is most prone to damage, especially if the temporary pipe is trailed at ground level or on the floor. Should the insulation become damaged, the water supply pipe is once more exposed to a risk of freezing.

It may be necessary to protect supply pipes for other liquids from low temperatures: for example, oil supply pipes for heating installations must be protected against very low temperatures to prevent the oil becoming too viscous to flow to a burner. Also, in the chemical processing industry, it is often necessary for liquids to be delivered to a processing site by exposed pipelines, and similar problems to those discussed above can be encountered should the ambient temperature be too low.

In an attempt to overcome the above problems, there have been proposals for the electrical heating of liquid supply pipes, utilising heating elements which are wrapped around the pipes. Such heating elements may be made considerably more compact and robust than thermal insulation and provided that the integrity of the heating element may be maintained, adequate protection against low ambient temperatures can be achieved. Nevertheless, there is still a considerable risk that the heating element may be damaged - for example in the case of a temporary water supply pipe serving a building site - and should this occur then once more there is a risk that the carried liquid within the supply pipe may be cooled too much. In the case of a water supply pipe, the water may then freeze, which may possibly also damage the pipe itself.

There has also been a proposal (US-A-3 938 360) to heat a liquid in a pipe by installing an insulated wire within a section of a pipe to be heated, and then applying an alternating current supply between that wire and the pipe wall. This technique is however limited to the use of a ferro-magnetic pipe and so cannot be employed with copper pipes such as are commonly used as water pipes, nor with insulating plastic pipes. Also, the electrical integrity of the pipe must be maintained over the whole of the length to be heated.

It is a principal aim of the present invention to provide both a method of and apparatus for maintaining a minimum temperature for a liquid in a pipe, such as (but not exclusively) water in a temporary supply pipe - for example as often found on building sites - which method and apparatus offer a significant improvement on the known techniques as discussed above.

According to one aspect of the present invention, there is provided a method for maintaining a minimum temperature for a liquid in a supply pipe, in which a method for maintaining a minimum temperature for a liquid in a supply pipe by electrical heating, in which a gland assembly is installed in a liquid supply pipe, a length of insulated electrical resistance wire is threaded through the gland assembly so that the wire extends within the pipe along the length thereof exposed to low ambient temperatures, and an electrical power supply is connected to feed electrical power to the resistance wire thereby generating heat within the pipe for transfer to liquid also within that pipe, characterised in that two separate gland assemblies are installed in the liquid supply pipe, spaced apart to be at or adjacent each end of the length of pipe wherein a minimum temperature is to be maintained, and in that two electrical resistance wires are threaded into the pipe through one gland assembly so as to extend along the length of the liquid supply pipe between the gland assemblies and then out of the second gland assembly, a loop of the electrical resistance wire being formed adjacent the second gland assembly to provide an external source of heat for example for a tap, ball valve assembly or the like, and the source of electrical power being connected to the wires adjacent said one gland assembly.

In the present invention, it is possible to maintain the temperature of the liquid in the pipe at a desired value, even despite very low temperatures: for example in the case of a temporary water supply, continuity of the supply may be maintained without freezing.

In performing the method of this invention, the pair of electrical resistance wires are insulated from each other, but optionally may be mechanically connected together or possibly contained within a single sheath.

The power supply unit preferably is adjustable, so as to permit an adjustment of the amount of current, and so of the heating effect, obtained when the apparatus is in use. Such adjustment may be controlled automatically by sensing the liquid temperature in the pipe, or such sensing may serve to control a switch which turns on or off the current supply. The overall resistance of the electrical resistance wire will depend upon the length of wire being employed, and the heat quantity which must be supplied depends upon the external ambient temperature, the temperature of the incoming liquid, and the required minimum temperature. In the case of an external water supply installation where the water temperature must be maintained above freezing point, it is found that a heating rate of approximately 10 Watts per metre of water supply pipe run gives an adequate level of protection for most conditions found in the United Kingdom.

According to a second aspect of the present invention, there is provided apparatus for performing the method of this invention as described above, which apparatus comprises apparatus for performing a method according to any of claims 1 to 5, which apparatus comprises a length of insulated electrical resistance wire, a gland assembly for installation in a liquid supply pipe and through which gland assembly the resistance wire may be threaded in a liquid-tight manner into the pipe so as to extend therealong, and an electrical power supply unit connectible to the resistance wire to supply current thereto and thus to cause the heating thereof, characterised in that the electrical resistance wire is in the form of a relatively long length of a pair of conductors separately insulated and twisted together such that the two ends of the wire lie closely adjacent, and such that at the far end of the wire, the conductor may be untwisted to form a loose loop, and in that a second gland assembly is provided, whereby the conductors may be lead out of the pipe through that further gland assembly, and then wrapped around a component adjacent that gland assembly.

Most preferably, the electrical resistance wire is in the form of a relatively long length of a pair of conductors separately insulated and twisted together such that the two ends of the wire lie closely adjacent, and such that at the far end of the wire, the conductor may be un-twisted to form a loose loop outside the second gland assembly. Such a pair of conductors may of course be formed by folding a single elongate conductor in half, and then twisting together the two parts. The loop may be wrapped around a tap, valve or the like so as to assist the maintenance of a minimum temperature therewithin.

The power supply unit advantageously comprises a mains-driven adjustable power supply unit, though for building site use or for use on other sites where there are temporary electrical and water supplies, it is advantageous for the power supply unit to be driven by a 110 Volt AC supply, rather than the conventional 240 Volt AC domestic mains supply, to minimise the risk of shock in the event that the wires are damaged. Conveniently, the power supply unit is adjustable for example by means of a solid-state phase-control arrangement, so permitting an adjustment of the power dissipated in the resistance wire to be approximately 10 Watts per metre. Such adjustment may be controlled automatically by a sensor which senses the liquid temperature in the pipe. Alternatively, the sensor may simply turn on or off the current flow, as appropriate.

By way of example only, one specific method and apparatus of this invention for heating a temporary water supply pipe will now be described in detail, reference being made to the accompanying drawings, in which:-

Figure 1 is a diagrammatic view of a water supply pipe fitted with apparatus of this invention to maintain the temperature of the water therewithin above freezing point;

Figure 2 is an enlarged view of a gland assembly for use in the installation of Figure 1;

Figure 3 is a circuit diagram of an adjustable power supply unit for use in supplying current to the resistance wire; and

Figure 4 is a block diagram of the complete power supply arrangement.

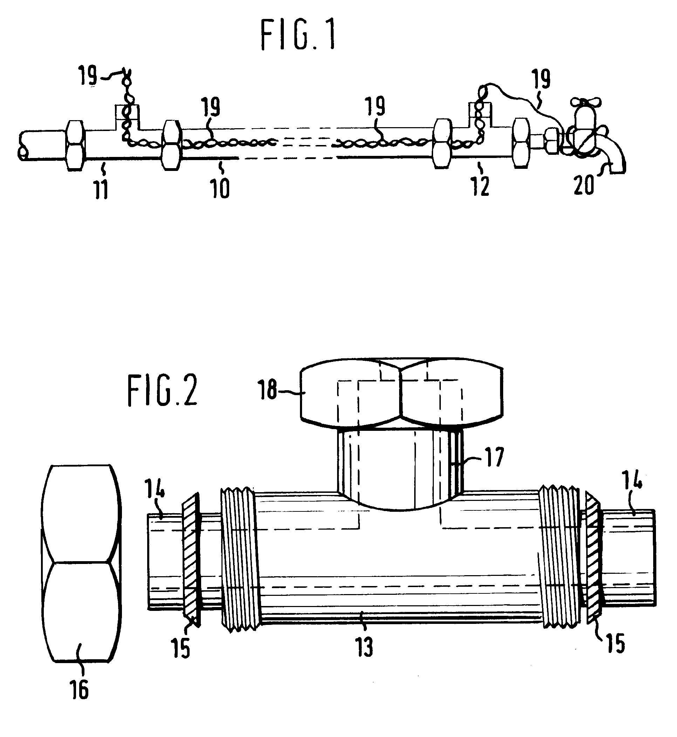

Referring initially to Figure 1, there is shown diagrammatically a water supply pipe 10 which is exposed to risk of freezing conditions, and which is to be protected. Two Tee-connectors 11 and 12 are installed at the two ends of the pipe 10, the branch connection of each of which Tee-connectors is formed as a gland assembly to permit a wire to pass therethrough, in a fluid-tight manner. Each Tee-connector is constructed as illustrated in Figure 2 where it can be seen that the connector has a main hollow body 13 formed for example from brass, which body 13 has a pair of aligned stubs 14 for insertion into plastic water supply pipes, to be connected, using sealing washers 15 and nuts 16. A further stub 17 is disposed at right angles to the axis of the stubs 14, and is fitted with a 20 mm cable gland having a nut 18 to permit the compression of packing therewithin and so to prevent leakage.

A relatively long length of insulated electrical resistance wire is folded in half and is then twisted along its length, so as to form a twisted pair 19 of wires, which pair is then threaded into the pipe 10 through the gland of connector 11, so as to extend along the length of the pipe 10 to the connector 12 whereat the loop end of the pair is passed through the gland of connector 12 to lie externally of the pipe. A tap 20 is mounted on one of the stubs of the connector 12, and the loop of wire is wrapped around the body of that tap, generally in the manner shown.

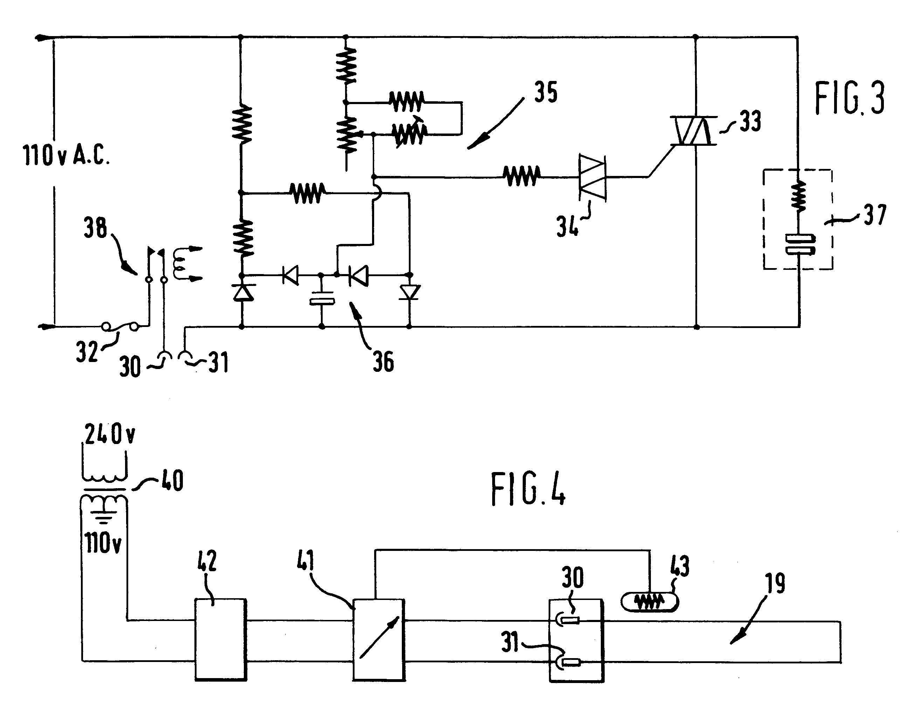

Turning now to Figures 3 and 4, there is shown a power supply arrangement suitable for use with the installation illustrated in Figure 1. The power supply unit of Figure 3 is arranged to allow adjustment of the power delivered, using a solid-state phase-controller, drawing power from a 110 Volt AC supply. The resistance wire is connected to terminals 30 and 31, so as to be in series with a fuse 32 and a triac 33, the phase-switching of which is governed by a diac 34 appropriately controlled by a resistor network 35. DC power for the control arrangement is provided by a diode network 36. An interference suppressor 37 is connected across the triac terminals, as shown. A relay 38 is arranged in series with the resistance wire, to interrupt the flow of current, which relay is controlled by a thermostat, described below.

Figure 4 shows a block diagram of the overall electrical installation, and it can be seen that a 240 Volt transformer 40 supplies power to the adjustable power-supply unit 41 (Figure 3) through an earth leakage trip 42. The power supply unit 41 should be adjusted so as to provide a heating effect of about 10 Watts per metre for the resistance wire pair 19, connected to the terminals 31 and 32. When so-adjusted, it is found that a broad range of protection against freezing can be obtained, for a typical temporary water supply such as is found on a building site.

A temperature sensing element 43 is mountable on the pipe to be protected, the element being coupled to the power-supply unit 41 to serve as a thermostatic control for the supply of current to the wire pair 19. If the sensed temperature rises above a pre-set value, then the current supply may be interrupted, to save power.

The above described apparatus may be used to maintain the temperature of some other liquid than water above a pre-set minimum value. For example, a pipe supplying central heating oil may be protected against the oil becoming too viscous to flow along the pipe when the pipe is exposed to very low temperatures, by means of the method and apparatus described above. In this case, however, the electricity supply may be at a higher voltage in view of the insulating properties of the oil.

## Claims

1. A method for maintaining a minimum temperature for a liquid in a supply pipe by electrical heating, in which a gland assembly is installed in a liquid supply pipe, a length of insulated electrical resistance wire is threaded through the gland assembly so that the wire extends within the pipe along the length thereof exposed to low ambient temperatures, and an electrical power supply is connected to feed electrical power to the resistance wire thereby generating heat within the pipe for transfer to liquid also within that pipe, characterised in that two separate gland assemblies (11,12) are installed in the liquid supply pipe (10), spaced apart to be at or adjacent each end of the length of pipe wherein a minimum temperature is to be maintained, and in that two electrical resistance wires are threaded into the pipe through one gland assembly (11) so as to extend along the length of the liquid supply pipe (10) between the gland assemblies (11,12) and then out of the second gland assembly (12), a loop (19) of the electrical resistance wire being formed adjacent the second gland assembly (12) to provide an external source of heat for example for a tap (20), ball valve assembly or the like, and the source of electrical power being connected to the wires (19) adjacent said one gland assembly (11).

2. A method according to claim 1, characterised in that a single length of insulated electrical resistance wire is employed, doubled back to define the two wires extending through the pipe with the two ends of the wire being located externally of the pipe (10) adjacent the gland assembly (11).

3. A method according to claim 1 or claim 2, characterised in that said two electrical resistance wires (19) are mechanically connected together or are contained within a single sheath.

4. A method according to any of the preceding claims, characterised in that the power supply unit is adjustable, to permit an adjustment of the amount of current supplied to the wire.

5. A method according to claim 4, characterised in that the power supply unit is adjustable to supply approximately 10 Watts per metre of water supply run.

6. Apparatus for performing a method according to any of claims 1 to 5, which apparatus comprises a length of insulated electrical resistance wire (19), a gland assembly (11) for installation in a liquid supply pipe (10) and through which gland assembly the resistance wire may be threaded in a liquid-tight manner into the pipe so as to extend therealong, and an electrical power supply unit connectible to the resistance wire to supply current thereto and thus to cause the heating thereof, characterised in that the electrical resistance wire is in the form of a relatively long length of a pair of conductors separately insulated and twisted together such that the two ends of the wire lie closely adjacent, and such that at the far end of the wire, the conductor may be untwisted to form a loose loop, and in that a second gland assembly (12) is provided, whereby the conductors are lead out of the pipe (10) through that further gland assembly (12), and then wrapped around a component (20) adjacent that gland assembly.

7. Apparatus according to claim 6, characterised in that there is provided a temperature sensing element (43) for disposition on or within a pipe to be heated, said element (43) being connected to the power supply unit to control the supply of current to the resistance wire (19).

## Patentansprüche

1. Verfahren zur Aufrechterhaltung einer Minimaltemperatur für eine Flüssigkeit in einer Versorgungsleitung durch elektrisches Heizen, wobei in einer Flüssigkeitsversorgungsleitung eine Packungsanordnung vorgesehen ist, ein Abschnitt eines isolierten elektrischen Widerstandsdrahtes durch die Packungsanordnung eingezogen ist, so daß sich der Draht innerhalb der Leitung entlang von deren Länge erstreckt und niedrigen Umgebungstemperaturen ausgesetzt ist, und eine elektrische Spannungsversorgung angeschlossen ist, um dem Widerstandsdraht elektrische Energie zuzuführen, so daß innerhalb dieses Rohres Wärme für die Übertragung auf im Rohr befindliche Flüssigkeit erzeugt wird, **dadurch gekennzeichnet**, daß zwei getrennte Packungsanordnungen (11, 12) in der Flüssigkeitsversorgungsleitung (10) vorgesehen sind, die im Abstand voneinander an oder benachbart zu jedem Ende des Abschnittes der Leitung angeordnet sind, in dem eine Minimaltemperatur aufrecht erhalten werden soll, und daß zwei elektrische Widerstandsdrähte durch eine Packungsanordnung (11) in die Leitung eingezogen sind, so daß sie sich zwischen den Packungsanordnungen (11, 12) entlang dem Abschnitt der Flüssigkeitsversorgungsleitung (10) und dann aus der zweiten Packungsanordnung 12) heraus erstrecken, wobei eine Schlaufe (19) des elektrischen Widerstandsdrahtes benachbart zur zweiten Packungsanordnung (12) gebilder ist, um eine äußere Wärmequelle beispielsweise für einen Hahn (20), eine Kugelventilanordnung o. ä. zu bilden, mund benachbart zu der einen Packungsanordnung (11) die elektrische Spannungsquelle mit den Drähten (19) verbunden ist.

2. Verfahren nach Anspruch 1, **dadurch gekennzeichnet**, daß ein einziger Abschnitt aus isoliertem elektrischen Widerstandsdraht verwendet wird, der zurückgeführt ist, um zwei sich durch die Leitung erstreckende Drähte zu bilden, wobei die beiden Enden des Drahtes außerhalb der Leitung (10) benachbart zur Packungsanordnung (11) liegen.

3. Verfahren nach Anspruch 1 oder 2, **dadurch gekennzeichnet**, daß die beiden elektrischen Widerstandsdrähte (19) mechanisch miteinander verbunden oder in einer einzigen Hülle enthalten sind.

4. Verfahren nach einem der vorhergehenden Ansprüche, **dadurch gekennzeichnet**, daß die Spannungsversorgungseinheit einstellbar ist, um eine Einstellung der Größe des dem Draht zugeführten Stroms zu ermöglichen.

5. Verfahren nach Anspruch 4, **dadurch gekennzeichnet,** daß die Spannungsversorgung einstellbar ist, um etwa 10 Watt pro laufendem Meter Wasserströmung zu liefern.

6. Vorrichtung zur Durchführung eines Verfahrens gemäß einem der Ansprüche 1 bis 5, mit einem Abschnitt aus isoliertem elektrischen Widerstandsdraht (19), einer in einer Flüssigkeitsversorgungsleitung (10) zu installierenden Packungsanordnung (10), durch die der Widerstandsdraht in flüssigkeitsdichter Weise in die Leitung eingezogen werden kann, um sich entlang dieser zu erstrecken, und einer mit dem Widerstandsdraht zu verbindenden elektrischen Spannungsquelle, um diesem Strom zuzuführen und so dessen Erwärmung zu verursachen, **dadurch gekennzeichnet**, daß der elektrische Widerstandsdraht die Form eines verhältnismäßig langen Abschnittes aus einem Paar von getrennt isolierten und miteinander verdrillten Leitern hat, so daß die beiben Enden des Drahtes nahe beieinander liegen und am entfernten Ende des Drahtes der Leiter zur Bildung einer lockeren Schlaufe entdrillt ist, und daß eine zweite Packungsanordnung (12) vorgesehen ist, so daß die Leiter durch die weitere Packungsanordnung (12) aus der Leitung (10) geführt und dann um ein Bauteil (12) benachbart zur Packungsanordnung gewickelt sind.

7. Vorrichtung nach Anspruch 6, **dadurch gekennzeichnet,** daß ein Temperaturmeßelement (43) zur Anordnung auf oder innerhalb einer zu erwärmenden Leitung vorgesehen ist, das mit der Spannungsversorgungseinheit verbunden ist, um die Zufuhr von Strom zum Widerstandsdraht (19) zu steuern.

## Revendications

1. Procédé de maintien d'un liquide dans une conduite d'alimentation à une température minimale, par chauffage électrique, dans lequel un dispositif à presse-étoupe est installé sur une conduite d'alimentation en liquide, une certaine longueur de fil de résistance électrique isolée est passée à travers le dispositif à presse-étoupe de manière à ce que le fil s'étende dans la conduite, sur la longueur de celle-ci qui est exposée à des températures ambiantes basses, une alimentation électrique étant connectée afin de fournir de la puissance électrique au fil de résistance, ce qui génère de la chaleur dans la conduite et donc également au liquide se trouvant dans cette conduite, **caractérisé en ce que** deux dispositifs à presse-étoupe (11,12) séparés sont installés sur la conduite d'alimentation, écartés l'un de l'autre de manière à se trouver en positions adjacentes à chaque extrémité de la longueur de conduite dans laquelle une température minimale doit être maintenue, et **en ce que** deux fils de résistance électrique sont introduits dans le tube à travers un dispositif à presse-étoupe (11) de manière à s'étendre suivant la longueur de la conduite d'alimentation en liquide (16) entre les dispositifs à presse-étoupe (11, 12), pour ressortir par le second dispositif à presse-étoupe (12), une boucle de résistance électrique étant formée à proximité du second dispositif à presse-étoupe de manière à fournir une source externe de chaleur par exemple à un robinet (20), à un dispositif à vanne sphérique ou similaire, la source de puissance électrique étant connectées aux fils (19) à proximité du premier dispositif à presse-étoupe (11).

2. Procédé selon la revendication 1, **caractérisé en ce qu'**on recourt à un fil simple de résistance électrique, doublé pour définir les deux fils s'étendant à travers la conduite, les deux extrémités du fil étant disposées à l'extérieur de la conduite (10), à proximité du dispositif à presse-étoupe (11).

3. Procédé selon la revendication 1 ou la revendication 2, **caractérisé en ce que** les deux dits fils de résistance électrique (19) sont reliés mécaniquement l'un à l'autre ou sont contenus dans une gaine unique.

4. Procédé selon l'une quelconque des revendications précédentes **caractérisé en ce que** l'unité d'alimentation en puissance est réglable, pour permettre un réglage de la quantité de courant fournie au fil.

5. Procédé selon la revendication 4, **caractérisé en ce que** l'unité d'alimentation en puissance est réglable, de manière à délivrer environ 10 Watts par mètre courant de conduite d'alimentation en eau.

6. Appareil destiné à mettre en oeuvre le procédé selon l'une quelconque des revendications 1 à 5, ledit appareil comprenant une longueur de fil de résistance électrique isolé (19), un dispositif à presse-étoupe (11) permettant son installation dans une conduite (10) d'alimentation en liquide, le fil de résistance pouvant être passé de manière étanche aux liquides dans la conduite de manière à s'étendre suivant la longueur de cette dernière, et une unité d'alimentation en puissance électrique pouvant être connectée au fil de resistance pour alimenter celui-ci en courant provoquer ainsi son échauffement, **caractérisé en ce que** le fil de résistance électrique se présente sous la forme d'une longueur relativement étendue d'une paire de conducteurs séparément isolés et torsadés ensemble de manière à ce que les deux extrémités du fil soient au voisinage immédiat l'un de l'autre, et à ce qu'à l'extrémité éloignée du fil le conducteur puisse être détorsadé de manière à former un boucle lâche, et **en ce qu'**un second dispositif à presse-étoupe (12) est prévu, les conducteurs étant conduits hors de la conduite (10) à travers cet autre dispositif à presse-étoupe (12) et ensuite repliés autour d'un composant (20) voisin de ce dispositif à presse-étoupe.

7. Appareil selon la revendication 6, **caractérisé en ce qu'**un élément thermosensible (43) est prévu pour être placé sur ou dans la conduite à chauffer, le dit élément (43) étant connecté à l'unité d'alimentation en puissance afin de contrôler l'alimentation en courant du fil de résistance (19).

## FIG.1

## FIG.2

FIG.3

110 v A.C.

EP 0 347 124 B1

FIG.4

240 v

110 v